# EUROPÄISCHE PATENTSCHRIFT

(11) **EP 1 642 446 B1**
(45) Veröffentlichungstag und Bekanntmachung des Hinweises auf die Patenterteilung: **05.10.2016**
(21) Anmeldenummer: 04741740.7
(22) Anmeldetag: 07.06.2004
(51) Int. Cl.: H04W 84/10, H04M 1/725, H04W 88/16, H04W 88/06

(54) **TELEKOMMUNIKATIONS-ENDGERÄT UND TELEKOMMUNIKATIONSANORDNUNG**
TELECOMMUNICATIONS TERMINAL AND TELECOMMUNICATIONS ASSEMBLY
TERMINAL DE TELECOMMUNICATION ET DISPOSITIF DE TELECOMMUNICATION

(30) Priorität: 03.07.2003 DE 10330075
(43) Veröffentlichungstag der Anmeldung: 05.04.2006
(73) Patentinhaber: Unify GmbH & Co. KG, 81379 München (DE)
(72) Erfinder: LUERS, Jürgen, 33178 Borchen (DE)
(74) Vertreter: Fritzsche, Thomas
(86) Internationale Anmeldenummer: PCT/EP2004/051041
(87) Internationale Veröffentlichungsnummer: WO 2005/004449

(56) Entgegenhaltungen:
- EP-A- 1 011 278
- WO-A-01/67684
- DE-A1- 10 103 743

## Beschreibung

Die Erfindung betrifft ein spezielle Telekommunikations-Endgerät mit neuartiger Funktionalität, welches nachfolgend auch als "Kommunikationsagent" oder auch kurz als "Agent" bezeichnet wird, sowie eine mindestens ein derartiges Telekommunikations-Endgerät umfassende Telekommunicationsanordnung.

Die Tele- und Datenkommunikation bestimmt heute sehr weitgehend die Arbeitsabläufe in der Wirtschaft und im gesellschaftlichen Leben in den Industrieländern, und bei vielen Menschen dort auch bereits Abläufe des privaten Lebens.

Die Benutzung mehrerer Kommunikationsendgeräte ist dabei weit verbreitet. Viele verfügen zu Hause über ein Telefon am Festnetzanschluss, unterwegs oft über ein privates Handy. Der Arbeitsplatz ist meist mit einem Telefon ausgestattet, das am firmeninternen Telefonnetz angeschlossen ist. Manchmal kann das firmeninterne Telefonnetz auf dem Firmengelände zusätzlich auch über ein Mobiltelefon benutzt werden. Und viele Autos sind mit Mobiltelefonen ausgestattet.

Aus der DE10103743 A1 ist ein Telekommunikationsendgerät mit einer Benutzerschnittstellenfunktion für eine Mehrzahl von Telekommunikationsanschlüssen und einer Nahbereichs-Funksende- und -empfangseinrichtung für einen drahtlosen Nachrichtenverkehr zur Übertragung von Telekommunikations-Verbindungsdaten und abzusendenden Nachrichten zu mindestens einem externen Gateway und zum Empfang von Rufsignalen und eingehenden Nachrichten von diesem mindestens einem externen Gateway zur Realisierung mindestens eines der Telekommunikations-Anschlüsse bekannt. Die externen Gateways sind Blue Tooth-Gateways, und Benutzerschnittstellen des Telekommunikationsendgeräts sind für die Kommunikation mittels Blue-Tooth-Standard eingerichtet.

Daraus ergeben sich für den Benutzer eine Reihe von Problemen:
- Er muss sich in die Bedienung aller Endgeräte einarbeiten. Beim Wechsel der Geräte muss er sich umorientieren.
- Eingehende Rufe und/oder Nachrichten werden überwiegend am Endgerätestandort signalisiert. Wenn der Benutzer nicht in unmittelbarer Nähe ist, kann er den Signalton überhören.
- Bei eingehenden Rufen und/oder Nachrichten hat sich der Benutzer unter Zeitdruck zum jeweiligen Endgerät zu begeben.
- Wenn ein mobiles Endgerät gemeinsam von mehreren Benutzern genutzt wird, hat der Benutzer ggf. das Endgerät (bei eingehenden Rufen unter Zeitdruck) zu suchen.
- Pflegt der Benutzer über ein Endgerät ein Adressbuch, so kann er die darin gespeicherten Kommunikationsadressen nicht problemlos auch auf den anderen Endgeräten benutzen. Im schlimmsten Fall kann er eine Verbindung nicht herstellen, da die dazu notwendigen Daten nicht auf dem gerade benutzten Endgerät verfügbar sind. Darüber hinaus muss er die Daten gegeneinander abgleichen und in der Regel mehrfach erfassen. Dies gilt auch für alle anderen persönlichen Daten wie sie z.B. in einem Terminkalender vorliegen.
- Wurde eine Verbindung über ein fest installiertes Endgerät aufgebaut, muss die Verbindung bei Notfällen (z.B. Essen brennt an) abgebrochen werden.
- Wenn das Endgerät von mehreren Benutzern genutzt wird, kann der jeweilige Benutzer nicht identifiziert werden. Für eine sichere Identifizierung ist an jedem Endgerät eine gesonderte Anmeldung mit Kennworteingabe durchzuführen. Und Kennworte sind stets problematisch.
- Der Benutzer hat keine systematische Übersicht über die am Standort zur Verfügung stehenden Kommunikationsmittel und kann damit auch nicht einfach die kostengünstigste Kommunikationsform wählen.

Diese Probleme, die keineswegs auf Sprachverbindungen begrenzt sind, sondern analog auch für Bild-, Video- und Datenübertragungen gelten, sind für die Mehrheit der Bevölkerung in den Industrieländern täglich virulent. Sie erschweren die Handhabung der modernen Kommunikationstechnik in durchaus signifikanter Weise. Neben Zeitverlusten in volkswirtschaftlich relevanten Größenordnungen führen sie auch massenhaft zu Fehlern oder Erfolglosigkeit beim Versuch, über Telekommunikationsverbindungen Kontakt zu anderen herzustellen.

Der Erfindung liegt daher die Aufgabe der Bereitstellung eines verbesserten Telekommunikations-Endgerätes sowie einer entsprechenden Telekommunikationsanordnung zugrunde, mit denen die Handhabung der verschiedenen verfügbaren TK-Anschlüsse typischer Nutzer im Hinblick auf die oben genannten Probleme erheblich vereinfacht, Zeit eingespart und Fehlerquellen weitgehend ausgeschaltet werden können.

Diese Aufgabe wird durch ein Telekommunikations-Endgerät mit den Merkmalen des Anspruchs 1 sowie eine Telekommunikationsanordnung mit den Merkmalen des Anspruchs 7 gelöst. Zweckmäßige Fortbildungen des Erfindungsgedankens sind Gegenstand der abhängigen Ansprüche.

Die Erfindung schließt folgende wesentliche Gedanken ein:
Der Benutzer führt ein neuartiges Kommunikationsendgerät mit, das im folgenden als Kommunikationsagent oder auch kürzer als Agent bezeichnet wird. Dieser Agent ist auf seine Person beschränkt und nimmt über eine noch zu definierende und zu standardisierende Nahfunktechnik Kontakt zu örtlich vorhandenen Gateways auf. Jedes Gateway stellt den Zugang zu einem Kommunikationsnetz dar und muss nicht unbedingt ein Benutzerinterface aufweisen. Die Gateway-Funktionalität kann aber auch in bestehende Endgeräteformen (ja sogar im "Agenten" selbst) integriert sein. Im Agenten selbst, damit Agenten direkt über das zugrundeliegende Nahfunknetz (also unter Umgehung einer anderen eventuell gebührenpflichtigen Infrastruktur) Kontakt aufnehmen können.

Gemäß der Erfindung hat das Telekommunikations-Endgerät genau ein internes Gateway zum Anschluss an ein Mobilfunknetz, mit dem die Wahlmittel, Rufsignalisierungsmittel, Eingabemittel und Ausgabemittel über interne Leitungen verbunden sind derart, dass das Telekommunikations-Endgerät als vollständiges Mobilfunk-Endgerät ausgebildet ist. In diesem Sinne wird also das von der Mehrzahl aller Mobiltelefonbenutzer ohnehin am Körper mitgeführte Handy zu einem Telekommunikations-Endgerät der erfindungsgemäßen Art bzw. Kommunikationsagenten, behält aber seine volle Funktionalität als Mobiltelefon.

In einer zweckmäßigen Fortbildung hat der Kommunikationsagent (das neuartige Endgerät) eine Nahbereichs-Funksende- und -empfangseinrichtung nach dem Bluetooth-Standard, mit zur Anbindung an das oder jedes Gateway angepasster Loadware. Hier kommt also der bereits seit einigen Jahren sich zunehmend für die Verknüpfung verschiedenartiger elektronischer Kleingeräte etablierende Bluetooth-Standard zu einer neuartigen Anwendung.

In einer anderen Variante hat der Kommunikationsagent eine Funksende- und -empfangseinrichtung vom Wireless-LAN-Typ, mit zur Anbindung an das oder jedes Gateway angepasster Loadware. Auch hierfür wurden in den letzten Jahren bereits die wesentlichen technischen Voraussetzungen geschaffen, indem ausgereifte Wireless-LAN-Lösungen unterschiedlicher Komplexität entwickelt und in der Praxis erprobt wurden.

Von besonderem Vorteil für die Nutzer ist eine Ausführung, bei der das Endgerät bzw. der Agent einen den Wahlmitteln zugeordneten Adressbuch-Speicher zur Speicherung der Verbindungsdatensätze einer Vielzahl vorbestimmter Verbindungen, die mit dem externen Gateway bzw. den externen Gateways und ggf. einem internen Gateway realisierbar sind. Ähnlich sinnvoll ist ein weiterer Ausbau zu einer PDA-Funktionalität, wie sie heute bereits hochwertige Mobilfunk-Endgeräte besitzen.

Darüber hinaus bietet sich hier der Vergleich zu einer Geldbörse an, die in diesem Fall auch Datenmaterial zur digitalen Unterschrift oder anderweitige Kenntworte aufbewahren und sichern kann, so wie dies heutzutage ja bereits gewisse Smartcards realisieren. Um es allgemeiner zu formulieren kann also ein solcher Agent neben Adressdaten durchaus auch weitere benutzerspezifische Daten transportieren und sichern. So wäre es auch denkbar, dass der Agent Kontonummer und Bankleitzahl oder Kreditkartennummern transportiert.

Um einerseits sicherzustellen, dass nicht unautorisierte Agenten die Gateways benutzen, und um andererseits den Bedarf an freien Kanälen der benutzten Nahfunktechnik niedrig zu halten, sollen die Gateways nur mit Agenten kommunizieren, die für sie freigeschaltet wurden. Als Nebeneffekt sollten die Agenten damit auch nur die wirklich für den Benutzer wichtigen Gateways anzeigen.

In diesem Sinne umfasst das vorgeschlagene Endgerät in einer bevorzugten Ausführungsform Authentisierungsdaten-Eingabemittel zur Eingabe von Authentisierungsdaten eines Nutzers, welche mit der Nahbereichs-Funksende- und -empfangseinrichtung zur Übertragung der Authentisierungsdaten an das oder jedes externe Gateway verbunden sind.

Erfindungsgemäß hat das Telekommunikations-Endgerät Anzeigemittel, auf welchen eine jeweilige Kennung lokal verfügbarer externer Gateways und die von diesen sowie vom Telekommunikations-Endgerät unterstützten Kommunikationsformen visualisierbar sind.

Unter Systemaspekten gestaltet sich die Funktion der vorgeschlagenen Telekommunikationsanordnung in etwa wie folgt:
Sobald der Agent in die Nähe eines geeigneten Gateways gelangt, bemerkt er an der einfallenden Signalstärke dessen Anwesenheit und beginnt mit einer automatischen, noch zu definierenden und zu standardisierenden Anmeldesequenz. Dabei macht es dem Gateway seine Identität und damit auch die des zugeordneten Benutzers bekannt. Das Gateway prüft, welche Rechte der jeweilige Agent (bzw. der damit assoziierte Benutzer oder eine assoziierte Benutzergruppe) besitzt und teilt ihm dann die eigene Kennung und die benutzbaren Kommunikationsformen mit. Deren Quittung seitens des Agenten beendet das Anmeldeprocedere.

Denkbar wäre aber auch z.B. ein öffentlich zugängliches Gateway an einem zentralen Platz bzw. als Ersatz/Ergänzung für die öffentliche Telefonzelle. In diesem Fall wäre der Benutzer dem Gateway noch nicht bekannt. Also müsste im Laufe der Anmeldeprozedur auch eine Benutzerkennung und ein gesondertes Passwort (eventuell ergänzt durch eine Kontonummer und eine Bankleitzahl) gesichert zum Gateway übertragen werden, damit die Kosten dann z.B. vom Konto abgebucht werden oder die Kreditkarte mit dem Betrag belastet wird. Ein solches öffentliches Gateway würde der Agent gegebenenfalls in besonderer Form anzeigen, wenn darüber keine eingehenden Rufe signalisiert werden. Denkbar wäre auch eine Kostenanzeige oder anderweitiger Vorabinformationen zum Gateway.

Der Agent visualisiert die Kennungen der örtlich verfügbaren Gateways und die daran geknüpften und von ihm unterstützten möglichen Kommunikationsformen. Er stellt darüber hinaus für jede dieser Kommunikationsformen ein geeignetes Benutzerinterface zur Verfügung. Der Agent fungiert also als universelles Endgerät, über das alle visualisierten Gateways und Kommunikationsformen benutzt werden können.

Abhängig von den konkreten Hardware-Ausführungen und den zugewiesenen Rechten und Einstellungen werden eingehende Rufe entweder ausschließlich oder parallel am Agenten signalisiert und können vom Benutzer direkt über ihn entgegengenommen werden. Ebenfalls soll die Möglichkeit bestehen, abgehende Rufe, Verbindungen und Nachrichten vom Agenten aus zu initiieren und vollständig abzuwickeln. Die transportierten Daten zwischen Agent und Gateway sollen vorzugsweise über dasselbe Nahfunknetz ausgetauscht werden, über das auch schon die automatische Anmeldeprozedur lief.

Dieses Verfahren bietet folgende Vorteile:
- Der Benutzer ist stets über örtlich verfügbare Gateways und Kommunikationsformen informiert und kann sie ohne erneute Einarbeitung benutzen.
- Der Benutzer ist stets über örtlich verfügbare Gateways erreichbar.
- Neben dem einmaligen Aufwand für die Konfiguration des Agenten und der Gateways fällt für den Benutzer im Allgemeinen kein weiterer Aufwand, insbesondere bei Ortswechseln, an.
- Der Benutzer kann seinen persönlichen Datenbestand wie z.B. Adressliste, Terminkalender, Mail und Datenablage stets mitführen.
- Die Signalisierung von eingehenden Rufen und Nachrichten erfolgt aus Benutzersicht zentral.
- Die Sicherheit wird erhöht, da der Benutzer nur noch ein einziges Gerät (nämlich den ihm zugeordneten und mitgeführten Agenten) absichern und dazu nur noch einen einzigen Authentisierungscode verwahren muss.
- Sind an einem Gateway zwischenzeitlich Nachrichten eingegangen, so kann es den Benutzer gezielt davon informieren, sobald dieser mit seinem Agenten in Reichweite kommt.
- Der Benutzer kann stets über die örtlich verfügbare kostengünstigste Kommunikationsform informiert werden.

Unter dem Aspekt der Nutzungs-Autorisierung hat im System das oder jedes Telekommunikations-Endgerät Authentisierungsdaten-Eingabemittel zur Eingabe von Authentisierungsdaten eines Nutzers, welche mit der Nahbereichs-Funksende- und -empfangseinrichtung zur Übertragung der Authentisierungsdaten nach außen verbunden sind. Das oder jedes hiermit verbindbare externe Gateway hat zum Empfang der Authentisierungsdaten ausgebildete Nahbereichs-Funkempfangsmittel zum Empfang der Authentisierungsdaten und hiermit verbundene Zugangskontrollmittel zur Freigabe oder Sperrung von Nachrichtenverkehr mit dem absendenden Telekommunikations-Endgerät in Reaktion auf das Ergebnis einer Prüfung der empfangenen Authentisierungsdaten.

Unter dem Aspekt des dynamischen Gateway-Zugriffs hat im System die Nahbereichs-Funkempfangseinrichtung des oder jedes externen Gateways einen Schwellwertdiskriminator zur Erfassung des Eintritts in den Funksendebereich des oder eines Telekommunikations-Endgerätes. Mit dem Ausgang des Schwellwertdiskriminators ist eine Kommunikationsstart-Steuereinrichtung zur Einleitung einer Kommunikationsstart-Prozedur mit dem betreffenden Telekommunikations-Endgerät verbunden derart, dass bei Eintritt in den Funksende-Bereich, ggf. unter der Bedingung einer positiven Authentisierungsprüfung, Nachrichtenverkehr zwischen dem Telekommunikations-Endgerät und dem Gateway etabliert wird.

In einer weiteren bevorzugten Konfiguration gehört zum System eine Mehrzahl von Telekommunikations-Endgeräten, deren Nahbereichs-Funksende- und -empfangseinrichtungen zum Austausch von Nachrichten untereinander, ohne Zwischenschaltung eines externen Netzes, ausgebildet sind. In diesem Sinne kann eine Gruppe der neuartigen TK-Endgeräte (Agenten), beispielsweise innerhalb einer Familie, die Funktion eines drahtlosen internen Kommunikationssystems übernehmen, bei dessen Betrieb keinerlei Nutzungskosten für ein externes Netz anfallen.

Zur Realisierung der Gateway-Funktionalität für Festnetzanschlüsse und festinstallierte Mobiltelefone in Kraftfahrzeugen kommen zwei Ansätze in Frage. Einerseits könnten neue Versionen der herkömmlichen Endgeräte um eine Bluetooth-Schnittstelle mit der notwendigen Loadware erweitert werden. Andererseits könnten völlig neue Endgeräte entwickelt werden, die neben der Gateway-Funktionalität keine weiteren Funktionen besitzen.

Ähnlich stellen sich die möglichen Entwicklungslinien für sonstige Systemkonfigurationen dar: Es ergeben sich sowohl sinnvolle Perspektiven für Zusatzkomponenten-Produktlinien zur "Aufrüstung" herkömmlicher TK-Endgeräte zur Kommunikation mit einem oder mehreren Agenten, als auch für Festnetz- oder Mobilfunk-Gateways für den privaten Gebrauch, die keine vollständige Endgeräte-Funktionalität aufweisen und ausschließlich für die Kommunikation in einem Agenten-System der hier beschriebenen Art gedacht sind. Es versteht sich, dass solche Gateways daher wesentlich kostengünstiger als klassische TK-Endgeräte sein können, was insbesondere in Firmen-Telefonnetzen erhebliche Kosteneinsparungen bewirken kann.

Im übrigen wird in diesem Kontext nochmals hingewiesen auf den weiter oben angesprochenen Aspekt einer Erweiterung der Funktion öffentlicher Telefonzellen um eine Gateway-Funktion zum Zusammenwirken mit privaten Kommunikationsagenten. Vorteile und Zweckmäßigkeiten der Erfindung ergeben sich im übrigen aus der nachfolgenden Beschreibung eines bevorzugten Ausführungsbeispiels und spezieller Aspekte der Erfindung anhand der beigefügten Figuren. Von diesen zeigen:
Fig. 1 eine skizzenartige Systemdarstellung einer Kommunikationsanordnung gemäß einer Ausführungsform der Erfindung und
Fig. 2 eine vereinfachte schematische Darstellung (Prinzipskizze) eines als Kommunikationsagenten dienenden Telekommunikations-Endgerätes und eines über Nahbereichs-Funkverbindung mit diesem kommunizierenden externen Gateways.

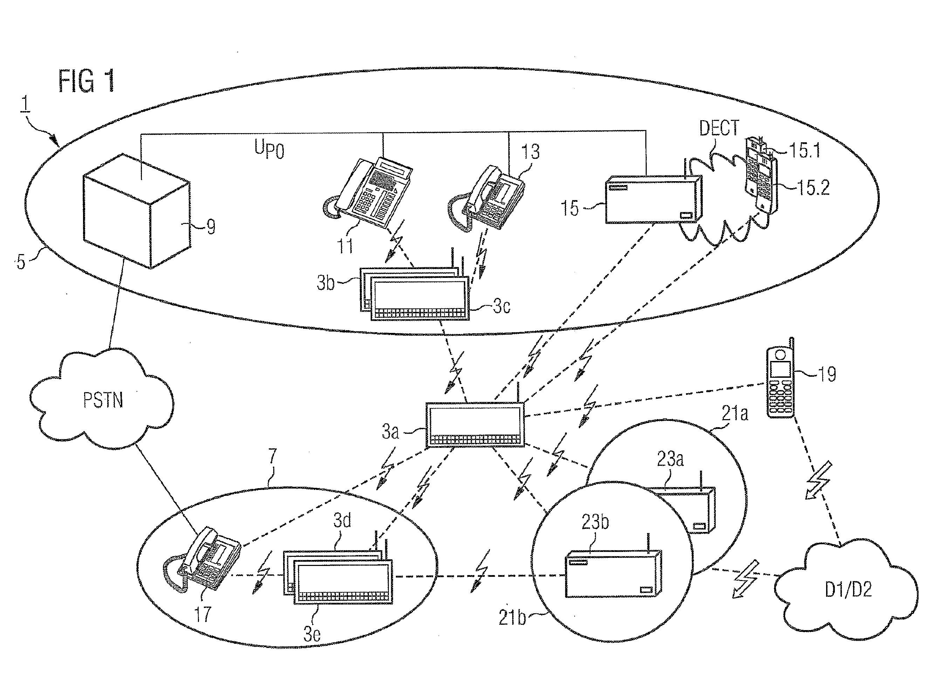

Fig. 1 zeigt eine TK-Anordnung 1 mit mehreren Kommunikationsagenten 3a bis 3e, von denen der Agent 3a einem Benutzer gehört, dessen berufliches und privates Kommunikationsumfeld durch die TK-Anordnung 1 gebildet ist. Die Kommunikationsagenten 3b, 3c sind Kollegen dieses Nutzers in einer Firma 5 zugeordnet, und die Agenten 3d, 3e werden von Familienmitgliedern in einer Wohnung 7 genutzt.

In der Firma 5 gibt es eine TK-Anlage 9, an die eine Reihe von als Gateways genutzten Endgeräten angeschlossen ist, von denen in der Figur beispielhaft ein erstes und zweites Festnetztelefon 11, 13 und ein DECT-Schnurlostelefon 15 mit zwei Handsets 15.1, 15.2 dargestellt sind. In der Wohnung 7 des Benutzers gibt es ein herkömmliches Festnetztelefon 17, welches ebenso wie die TK-Anlage 9 in der Firma 5 an ein öffentliches Festnetz PSTN angeschlossen ist. Weiterhin nutzt der Benutzer ein Mobiltelefon 19 sowie zwei in je ein Auto 21a, 21b (Dienstwagen bzw. Privatwagen der Ehefrau) fest eingebaute Mobilfunk-Sende/Empfangsteile 23a, 23b (Auto-Gateways), die ebenso wie das Mobiltelefon 19 an ein Mobilfunknetz D1, D2 ... angeschlossen sind.

Mit all den genannten Geräten, die teils als komplette Endge räte ausgeführt sind und teils mit reduzierter Funktionalität lediglich als Gateway im System gemäß dem Ausführungsbeispiel dienen, kommunizieren der hier im Mittelpunkt stehende Nutzer selbst sowie in einem gewissen Grade auch seine Kollegen und Familienangehörigen über Nahbereichs-Funkverbindungen, die in der Figur (im Unterschied zu den fett gezeichneten Blitzen für Mobilfunknetzanbindungen) als einfache Blitze symbolisiert sind.

Ein typischer Ablauf der Nutzung dieses Systems durch den hier angenommenen Nutzer (Familienvater) sieht etwa folgendermaßen aus: Er befindet sich zuhause im Dachgeschoss und sieht auf dem Display seines Agenten 3a, dass er über das analoge Festnetz PSTN und über das Gateway 23a seines vor dem Haus stehenden Firmenwagens 21a Rufe entgegennehmen und abgehende Rufe führen kann. Er sieht, dass sowohl das Auto als auch der Agent seiner Frau nicht angezeigt werden, sie also das Haus mit ihrem Wagen verlassen hat. Er betätigt das Symbol für den Agenten seines älteren Sohnes, der sich daraufhin meldet und ihm mitteilt, dass seine Vermutung korrekt ist, und ihn zum Frühstück herunterbittet.

Später fährt er in die Firma. Als er vor der Firma hält, zeigt sein Agent 3a wiederum das Gateway 23a seines Firmenwagens und seines Arbeitsplatztelefons 11. Er ist gerade auf dem Weg in eine Besprechung, als er über das Telefon des Firmenwagens gerufen wird. Er teilt dem Anrufer mit, dass er schon in der Firma sei und gleich den Besprechungsraum erreichen wird. Der Anrufer teilt ihm mit, er solle erst noch im Serverraum vorbeischauen, da ein Rechner ausgefallen sei. Nachdem er den Server wieder in Betrieb genommen hat, ruft er mittels seines Agenten über das firmeninterne Telefonnetz eines Kollegen an und informiert diesen über den neuen Status.

Als weiteres plastisches Beispiel sei das Treffen der Familienmitglieder in der Stadt genannt, die so ihre Nähe zueinander durch das Erscheinen des jeweils anderen Agenten auf ih rer eigenen Anzeige erkennen könnten. Treffen in unübersichtlichen und/oder überfüllten Bereichen würden so erleichtert.

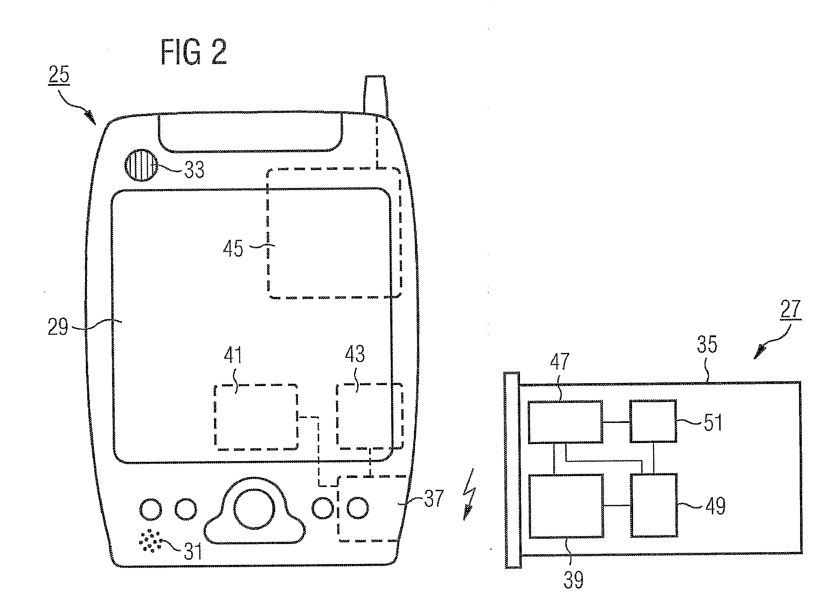

Fig. 2 zeigt eine als Kommunikationsagent im Sinne der Erfindung fungierende Mobiltelefon/PDA-Kombination 25 mit ihren für die vorliegende Erfindung wichtigsten Funktionen sowie ein zugeordnetes Festnetz-Gateway 27. Die Mobiltelefon/PDA-Kombination 25 hat in üblicher Weise einen Touchscreen 29 zur Ziffern- und Texteingabe, der zugleich als Wahleinrichtung des Mobiltelefonteiles dient, eine Sprechkapsel 31 zur Spracheingabe, eine Hörkapsel 33 zur Sprachausgabe und Rufsignalisierung (wobei letztere parallel über den Touchscreen 29 erfolgen wird) sowie den Touchscreen als Mittel zur Darstellung eingehender Text-, Bild- oder Videonachrichten.

Das Festnetz-Gateway 27 ist im wesentlichen durch eine ISDN-Karte 35 gebildet, und die Verbindung zwischen Mobiltelefon/PDA-Kombination 25 und Gateway 27 wird durch je eine (an sich bekannte) Bluetooth-Sende- und -Empfangseinrichtung 37, 39 in beiden Komponenten hergestellt. Als weitere wesentliche Komponenten sind im Kommunikationsagenten 25 ein Adressbuch-Speicher 41 sowie eine erste Authentisierungsprüfeinrichtung 43, die mit dem Touchscreen 29 als Authentisierungsdaten-Eingabeeinrichtung in Verbindung steht, und ein (internes) Mobilfunk-Gateway 45 dargestellt.

Das Festnetz-Gateway 27 hat eine zweite Authentisierungsprüfeinrichtung 47 (Zugangskontrolleinrichtung) zur Prüfung der Autorisierung von Zugriffen durch den Kommunikationsagenten 25 bei Eintritt in den Nahfunkbereich aufweist. Schließlich hat das Festnetz-Gateway 27 noch einen mit seiner Bluetooth-Sende/Empfangseinrichtung 39 verbundenen Schwellwertdiskriminator 49 zur Erfassung einer Schwellwert-Feldstärke der Nahbereichs-Funkverbindung und eine hiermit verbundene Kommunikationsstart-Steuereinrichtung 51 zur Einleitung eines Anmeldeprocederes mit dem Kommunikationsagenten 25.

Mit diesen hier dargestellten Komponenten werden die weiter oben erläuterten Funktionszusammenhänge realisiert, so dass eine Wiederholung der diesbezüglichen Beschreibung an dieser Stelle nicht erforderlich ist.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen.

## Patentansprüche

1. Telekommunikations-Endgerät mit Benutzerschnittstellen-Funktion für eine Mehrzahl von Telekommunikationsanschlüssen, mit
- Wahlmitteln zur Eingabe von Telekommunikationsverbindungsdaten,
- Rufsignalisierungsmitteln zur Signalisierung von an einem der Telekommunikations-Anschlüsse eingehenden Rufen,
- Eingabemitteln zur Eingabe abzusendender Nachrichten,
- Ausgabemitteln zur Ausgabe eingehender Nachrichten,
- einer Nahbereichs-Funksende- und -empfangseinrichtung für einen drahtlosen Nachrichtenverkehr zur Übertragung der Telekommunikations-Verbindungsdaten und abzusendender Nachrichten zu mindestens einem externen Gateway, das einem der Telekommunikations-Anschlüsse zugeordnet ist, und zum Empfang von Rufsignalen und eingehenden Nachrichten von dem mindestens einen externen Gateway zur Realisierung mindestens eines der Telekommunikations-Anschlüsse,
**dadurch gekennzeichnet,**
**dass** das Telekommunikations-Endgerät genau ein internes Gateway zum Anschluss an ein Mobilfunknetz hat, mit dem die Wahlmittel, Rufsignalisierungsmittel, Eingabemittel und Ausgabemittel über interne Leitungen verbunden sind derart,
**dass** das Telekommunikations-Endgerät
- als vollständiges Mobilfunk-Endgerät ausgebildet ist,
- Anzeigemittel aufweist, auf welchen eine jeweilige Kennung lokal verfügbarer externer Gateways und die von diesen sowie vom Telekommunikations-Endgerät unterstützten Kommunikationsformen visualisierbar sind, und
- für eine Mehrzahl von unterschiedlichen Kommunikationsformen, die von externen Gateways unterstützt werden, jeweils eine geeignete Benutzerschnittstelle zur Verfügung stellt.

2. Telekommunikations-Endgerät nach Anspruch 1,
**gekennzeichnet durch**
eine Nahbereichs-Funksende- und -empfangseinrichtung nach dem Bluetooth-Standard, mit zur Anbindung an das oder jedes Gateway angepasster Loadware.

3. Telekommunikations-Endgerät nach Anspruch 1,
**gekennzeichnet durch**
eine Funksende- und -empfangseinrichtung vom Wireless-LAN-Typ, mit zur Anbindung an das oder jedes Gateway angepasster Loadware.

4. Telekommunikations-Endgerät nach einem der vorangehenden Ansprüche,
**gekennzeichnet durch**
einen den Wahlmitteln zugeordneten Benutzerdatenspeicher für benutzerindividuelle Daten, insbesondere Adressbuch-Speicher zur Speicherung der Verbindungsdatensätze einer Vielzahl vorbestimmter Verbindungen, die mit dem externen Gateway bzw. den externen Gateways und ggf. einem internen Gateway realisierbar sind.

5. Telekommunikations-Endgerät nach einem der vorangehenden Ansprüche,
**gekennzeichnet durch**
von Telekommunikationsfunktionen unabhängige Verarbeitungsund Speichermittel zur Realisierung einer PDA-Funktionalität.

6. Telekommunikations-Endgerät nach einem der vorangehenden Ansprüche,
**gekennzeichnet durch** Authentisierungsdaten-Eingabemittel zur Eingabe von Authentisierungsdaten eines Nutzers, welche mit der Nahbereichs-Funksende- und -empfangseinrichtung zur Übertragung der Authentisierungsdaten an das oder jedes externe Gateway verbunden sind.

7. Telekommunikationsanordnung mit mindestens einem Telekommunikations-Endgerät nach einem der vorangehenden Ansprüche und einer Mehrzahl externer Gateways.

8. Telekommunikationsanordnung nach Anspruch 7, **dadurch gekennzeichnet, dass** mindestens eines der externen Gateways keine internen endgerätetypischen Wahlmittel, Rufsignalisierungsmittel, Eingabemittel und Ausgabemittel aufweist.

9. Telekommunikationsanordnung nach Anspruch 7 oder 8,
**dadurch gekennzeichnet, dass** das oder jedes Telekommunikations-Endgerät Authentisierungsdaten-Eingabe- und Prüfmittel zur Eingabe und Prüfung von Authentisierungsdaten eines Nutzers, welche mit der Nahbereichs-Funksende- und -empfangseinrichtung zur Übertragung der Authentisierungsdaten nach außen verbunden sind, und das oder jedes hiermit verbindbare externe Gateway zum Empfang der Authentisierungsdaten ausgebildete Nahbereichs-Funkempfangsmittel zum Empfang der Authentisierungsdaten und hiermit verbundene Zugangskontrollmittel zur Freigabe oder Sperrung von Nachrichtenverkehr mit dem absendenden Telekommunikations-Endgerät in Reaktion auf das Ergebnis einer Prüfung der empfangenen Authentisierungsdaten aufweist.

10. Telekommunikationsanordnung nach einem der Ansprüche 7 bis 9,
**dadurch gekennzeichnet, dass** die Nahbereichs-Funkempfangseinrichtung des oder jedes externen Gateways einen Schwellwertdiskriminator zur Erfassung des Eintritts in den Funksendebereich des oder eines Telekommunikations-Endgerätes und eine mit dem Ausgang des Schwellwertdiskriminators verbundene Kommunikationsstart-Steuereinrichtung zur Einleitung einer Kommunikationsstart-Prozedur mit dem betreffenden Telekommunikations-Endgerät aufweist derart, dass bei Eintritt in den Funksende-Bereich, ggf. unter der Bedingung einer positiven Authentisierungsprüfung, Nachrichtenverkehr zwischen dem Telekommunikations-Endgerät und dem Gateway etabliert wird.

11. Telekommunikationsanordnung nach einem der Ansprüche 7 bis 10,
**gekennzeichnet durch**
eine Mehrzahl von Telekommunikations-Endgeräten nach einem der Ansprüche 1 bis 6, deren Nahbereichs-Funksende- und -empfangseinrichtungen zum direkten Austausch von Nachrichten untereinander, ohne Zwischenschaltung eines externen Netzes, ausgebildet sind.

## Claims

1. A telecommunications terminal with user interface function for a plurality of telecommunication connections, with
- selection means for entering telecommunication connection data,
- call signaling means for signaling of calls arriving at one of the telecommunication connections,
- entry means for entering messages to be sent,
- output means for outputting arriving messages,
- a close-range radio transceiver for wireless message traffic for the transmission of telecommunication connection data and messages to be sent to at least one external gateway which is associated with one of the telecommunication connections, and for receiving call signals and arriving messages from the at least one external gateway for implementing at least one of the telecommunication connections,
**characterized in that**
the telecommunications terminal has precisely one internal gateway for connection to a mobile radio network, to which the selection means, call signaling means, entry means and output means are connected via internal lines in such a manner that the telecommunications terminal
- is designed as a complete mobile radio terminal,
- comprises display means, on which a respective identification of locally available external gateways and the forms of communication supported by said gateways as well as by the telecommunications terminal can be visualized, and
- provides in each case a suitable user interface for a plurality of different forms of communication which are supported by external gateways.

2. The telecommunications terminal according to claim 1,
**characterized by**
a close-range radio transceiver in accordance with the Bluetooth standard, with loadware adapted for the connection to the or each gateway.

3. The telecommunications terminal according to claim 1,
**characterized by**
a radio transceiver of the wireless LAN type, with loadware adapted for the connection to the or each gateway.

4. The telecommunications terminal according to any one of the preceding claims,
**characterized by**
a user data memory associated with the selection means, for user-specific data, in particular address book memories for storing the connection data sets of a plurality of predetermined connections which can be implemented with the external gateway or with the external gateways and optionally with an internal gateway.

5. The telecommunications terminal according to any one of the preceding claims,
**characterized by**
processing means that are independent of telecommunication functions, and storage means for implementing a PDA functionality.

6. The telecommunications terminal according to any one of the preceding claims, **characterized by**
authentication data entry means for entering authentication data of a user, which are connected to the close-range radio transceiver for the transmission of the authentication data to the or each external gateway.

7. A telecommunications assembly with at least one telecommunications terminal according to any one of the preceding claims and a plurality of external gateways.

8. The telecommunications assembly according to claim 7,
**characterized in that** at least one of the external gateways comprises no internal terminal-specific selection means, call signaling means, entry means and output means.

9. The telecommunications assembly according to claim 7 or 8,
**characterized in that** the or each telecommunications terminal comprises authentication data entry and verification means for entering and verifying authentication data of a user, which are connected to the close-range radio transceiver for the transmission of the authentication data outward, and the or each external gateway that can be connected thereto comprises close-range radio receivers designed for receiving the authentication data, and access control means connected thereto for the release or the blocking of message traffic with the transmitting telecommunications terminal in response to the result of a verification of the authentication data received.

10. The telecommunications assembly according to any one of claims 7 to 9,
**characterized in that** the close-range radio receiver of the or each external gateway comprises a threshold value discriminator for detecting the entrance of the or a telecommunications terminal into the radio transmission range, and a communication-start control device connected to the output of the threshold value discriminator for the initiation of a communication start procedure with the corresponding telecommunications terminal, in such a manner that, upon entrance into the radio transmission range, optionally subject to the condition of a positive authentication verification, message traffic between the telecommunications terminal and the gateway is established.

11. The telecommunications assembly according to any one of claims 7 to 10,
**characterized by**
a plurality of telecommunications terminals according to any one of claims 1 to 6, the close-range radio transceivers of which are designed for the direct exchange of messages among one another, without interconnection of an external network.

## Revendications

1. Terminal de télécommunication avec fonction interface utilisateur pour une pluralité de raccords de télécommunication, avec
- des moyens de sélection pour la saisie de données de connexion de télécommunication,
- des moyens de signalisation d'appel pour la signalisation d'appels entrants au niveau d'un des raccords de télécommunication,
- des moyens de saisie pour la saisie de messages à envoyer,
- des moyens d'édition pour l'édition de messages entrants,
- un dispositif d'envoi et de réception radio en champ proche pour un échange de messages sans fil pour la transmission des données de connexion de télécommunication et de messages à envoyer à au moins une passerelle externe, qui est affectée à un des raccords de télécommunication, et pour la réception de signaux d'appel et de messages entrants de l'au moins une passerelle externe pour la réalisation d'au moins un des raccords de télécommunication,
**caractérisé en ce que**,
le terminal de télécommunication a exactement une passerelle interne pour le raccordement à un réseau de téléphonie mobile, auquel les moyens de sélection, les moyens de signalisation d'appel, les moyens de saisie et les moyens d'édition sont reliés via des lignes internes de telle sorte que le terminal de télécommunication
- est réalisé sous forme de terminal de téléphonie mobile complet,
- présente des moyens d'affichage, sur lesquels une identification respective de passerelles externes localement disponibles et les formes de communication supportées par celles-ci ainsi que par le terminal de télécommunication sont visualisables, et
- met à disposition respectivement une interface utilisateur pour une pluralité de différentes formes de communication, qui sont supportées par des passerelles externes.

2. Terminal de télécommunication selon la revendication 1,
**caractérisé par**
un dispositif d'envoi et de réception radio en champ proche d'après le standard Bluetooth, avec loadware adapté à la liaison à la ou à chaque passerelle.

3. Terminal de télécommunication selon la revendication 1,
**caractérisé par**
un dispositif d'envoi et de réception radio de type LAN sans fil, avec loadware adapté à la liaison à la ou à chaque passerelle.

4. Terminal de télécommunication selon l'une quelconque des revendications précédentes,
**caractérisé par**
une mémoire de données utilisateur affectée aux moyens de sélection pour des données propres à l'utilisateur, en particulier mémoire de carnet d'adresses, pour l'enregistrement des jeux de données de connexion d'une pluralité de connexions prédéfinies, qui peuvent être réalisées avec la passerelle externe ou les passerelles externes et le cas échéant une passerelle interne.

5. Terminal de télécommunication selon l'une quelconque des revendications précédentes,
**caractérisé par**
des moyens de traitement et de mémoire indépendants des fonctions de télécommunication pour la réalisation d'une fonctionnalité PDA.

6. Terminal de télécommunication selon l'une quelconque des revendications précédentes,
**caractérisé par**
des moyens de saisie de données d'authentification pour la saisie de données d'authentification d'un utilisateur, qui sont reliés avec le dispositif d'envoi et de réception radio en champ proche pour la transmission des données d'authentification à la ou à chaque passerelle externe.

7. Dispositif de télécommunication avec au moins un terminal de télécommunication selon l'une quelconque des revendications précédentes et une pluralité de passerelles externes.

8. Dispositif de télécommunication selon la revendication 7,
**caractérisé en ce que**
au moins une des passerelles externes ne présente pas de moyens de sélection, moyens de signalisation d'appel, moyens de saisie et moyens d'édition internes propres au terminal.

9. Dispositif de télécommunication selon la revendication 7 ou 8,
**caractérisé en ce que**
le ou chaque terminal de télécommunication présente des moyens de saisie et de contrôle des données d'authentification pour la saisie et le contrôle des données d'authentification d'un utilisateur, lesquels sont reliés avec le dispositif d'envoi et de réception radio en champ proche pour la transmission des données d'authentification vers l'extérieur, et la ou chaque passerelle externe pouvant y être reliée présente des moyens de réception radio en champ proche réalisés pour la réception des données d'authentification pour la réception des données d'authentification et des moyens de contrôle d'accès associés pour la libération et le blocage de l'échange de messages avec le terminal de télécommunication émetteur en réaction au résultat d'un contrôle des données d'authentification reçues.

10. Dispositif de télécommunication selon l'une quelconque des revendications 7 à 9,
**caractérisé en ce que**
le dispositif de réception radio en champ proche de la ou de chaque passerelle externe présente un discriminateur de valeur seuil pour la détection de l'entrée dans la plage d'émission radio du ou d'un terminal de télécommunication et un dispositif de commande de début de communication relié à la sortie du discriminateur de valeur seuil pour le lancement de la procédure de début de communication avec le terminal de télécommunication concerné de telle sorte qu'en cas d'entrée dans la plage d'émission radio, le cas échéant sous condition d'un contrôle d'authentification positif, l'échange de messages entre le terminal de télécommunication et la passerelle est établi.

11. Dispositif de télécommunication selon l'une quelconque des revendications 7 à 10,
**caractérisé par**
une pluralité de terminaux de télécommunication selon l'une quelconque des revendications 1 à 6, dont les dispositifs d'émission et de réception radio en champ proche sont réalisés pour l'échange direct de messages entre eux, sans l'intermédiaire d'un réseau externe.
